# EUROPÄISCHE PATENTSCHRIFT

(11) **EP 1 724 449 B1**
(45) Veröffentlichungstag und Bekanntmachung des Hinweises auf die Patenterteilung: **21.05.2008**
(21) Anmeldenummer: 06004100.1
(22) Anmeldetag: 01.03.2006
(51) Int. Cl.: F01P 11/02, F01M 11/04, B60K 15/04

(54) **Serviceeinheit zur Betriebsmittelergänzung**
Service unit for filling working fluids
Unité de service pour remplissage des fluides de travail

(30) Priorität: 10.05.2005 DE 102005021457
(43) Veröffentlichungstag der Anmeldung: 22.11.2006
(73) Patentinhaber: Dr. Ing. h.c. F. Porsche Aktiengesellschaft, 71287 Weissach (DE)
(72) Erfinder: Berta, Christian, 75365 Calw (DE); Gocht, Helmut, 71297 Mönsheim (DE)

(56) Entgegenhaltungen:
- DE-A1- 3 200 311
- DE-B- 1 096 787
- US-A- 1 699 889
- US-A- 5 992 481

## Beschreibung

Bei der Erfindung wird ausgegangen von einer Serviceeinheit zur Betriebsmittelergänzung, gemäß Oberbegriff des Anspruchs 1.

Eine gattungsgemäße Serviceeinheit zur Betriebsmittelergänzung, hier Kraftstoff, an einem Fahrzeug mit einer Antriebsmaschine als Aggregat kann der DE 32 00 311 A1 entnommen werden. Diese Serviceeinheit weist für die Kraftstoffergänzung einen Befüllstutzen als Serviceelement sowie eine den Befüllstutzen zumindest teilweise umgebende Auffangschale auf, die dazu dient, beim Nachtanken über eine Zapfpistole verschütteten Kraftstoff aufzufangen. Zum Nachtanken über einen Kanister ist der Serviceeinheit ein als formsteife Einfüllschale ausgebildeter Tropfschutz zugeordnet, der entweder von Hand aus seiner innerhalb der Auffangschale liegenden Ruhestellung in eine aus der Auffangschale herausragende Schutzstellung umgesteckt oder um eine Lagerachse geschwenkt werden kann.

Eine Serviceeinheit zur Betriebsmittelergänzung bzw. Wartung/Kontrolle an einem Fahrzeug mit einer Antriebsmaschine als Aggregat kann der nachveröffentlichten DE 103 59 767 A1 entnommen werden. Diese Serviceeinheit ist vorzugsweise innerhalb des Fahrzeugs, beispielsweise im Gepäckraum, angeordnet und weist für die Betriebsmittelergänzung einen Befüllstutzen als Serviceelement auf, beispielsweise für Kühlflüssigkeit der Antriebsmaschine, sowie eine den Befüllstutzen zumindest teilweise umgebende Auffangschale, die dazu dient, bei der Betriebsmittelergänzung verschüttete Flüssigkeit aufzufangen und vorzugsweise über einen Ablauf abzuleiten.

Aufgabe der Erfindung ist es, eine Serviceeinheit der eingangs genannten Art anzugeben, mit der die Betriebsmittelergänzung bzw. Wartung vereinfacht werden kann.

Gelöst wird diese Aufgabe mit einer Serviceeinheit, die die in Anspruch 1 genannten Merkmale aufweist. Weiterbildungen der Erfindung sind in den Unteransprüchen angegeben.

Die mit der Erfindung hauptsächlich erzielten Vorteile sind darin zu sehen, dass bei einer über die Serviceeinheit durchgeführten Betriebsmittelergänzung eventuell verschüttete oder austretende Flüssigkeit besser aufgefangen und in die Auffangschale abgeleitet werden kann. Ferner kann ggf. aus dem Serviceelement austretender Dampf, der an der Auffangschale bzw. an der Tropfschutzabdeckung kondensiert, abgeleitet werden. Ist der Serviceeinheit beispielsweise ein Peilstab, insbesondere Ölmessstab, zugeordnet, kann über die Tropfschutzabdeckung bei der Füllstandskontrolle vom Peilstab abtropfende Flüssigkeit aufgefangen werden. Die die Auffangschale bzw. Serviceeinheit umgebenden Fahrzeugbereiche werden somit in einfacher Art und Weise vor Verschmutzung geschützt. Insbesondere kann diese erfindungsgemäße Serviceeinheit bei einem Kraftfahrzeug verwendet werden, bei dem die Serviceeinheit im Fahrzeuginnenraum bzw. Gepäckraum angeordnet ist. Eine Verschmutzung der die Serviceeinheit umgebenden Innenverkleidungsteile des Kraftfahrzeugs kann somit in den meisten Fällen verhindert werden. Außerdem ist vorteilhaft, dass die Tropfschutzabdeckung durch das Auseinanderfalten in die Schutzstellung einen großen Flächenbereich abdecken kann.

Mit den in Anspruch 2 genannten Merkmalen kann die Tropfschutzabdeckung mit dem Befestigungsabschnitt mit der Auffangschale fest verbunden werden, so dass lediglich der Faltabschnitt der Tropfschutzabdeckung durch Auseinanderfalten in die Schutzstellung überführbar ist.

Eine einfache Herstellung der Tropfschutzabdeckung ergibt sich nach den Merkmalen des Anspruchs 3.

Nach einer in Anspruch 4 angegebenen Weiterbildung lässt sich die Tropfschutzabdeckung mit dem Faltabschnitt auf besonders einfache Weise realisieren.

Eine einfache Befestigung der Tropfschutzabdeckung an der Auffangschale ist in Anspruch 6 angegeben. Durch die Ausgestaltung des Verbindungsmittels als Hintergriffselement kann die Tropfschutzabdeckung an der Auffangschale eingehängt, eingeclipst bzw. eingeknüpft werden. Durch das Hintergriffselement wird außerdem der Durchbruch in der Auffangschale abgedichtet.

Nach einem in Anspruch 7 angegebenen Ausführungsbeispiel lässt sich das Verbindungsmittel auf besonders einfache Weise, insbesondere bei der Ausführung als Hintergriffselement, mit der Auffangschale verbinden.

Gemäß einer in Anspruch 8 angeführten Ausführungsvariante lässt sich ein verbesserter Schutz mit der Tropfschutzabdeckung erreichen, da verschüttete oder austretende Flüssigkeit bzw. schnell kondensierender Dampf nicht seitlich über die Tropfschutzabdeckung abfließen kann, da die Seitenwände vorgesehen sind.

Nach den in den Ansprüchen 9 bis 12 angeführten Ausführungsvarianten lässt sich die Tropfschutzabdeckung in vorteilhafter Weise auseinanderfalten und für die Überführung in die Ruhestellung wieder zusammenfalten. Die Faltlinien können beispielsweise durch geschwächte Abschnitte in dem Material der Tropfschutzabdeckung realisiert sein, so dass Filmscharniere gebildet sind.

Gemäß einem in Anspruch 13 angegebenen Ausführungsbeispiel kann der Befestigungsabschnitt sich über einen weiten Bereich der inneren Randkontur der Auffangschale erstrecken und außerdem dichtend an der inneren Randkontur anliegen.

Bei entsprechender Ausgestaltung der Auffangschale wird in vorteilhafter Weise der Befestigungsabschnitt gemäß Anspruch 14 ausgebildet. Die Auffangschale besitzt demnach eine ovale, eckige oder ähnliche Randkontur, an der teilweise der Befestigungsabschnitt mit seiner Basis und den seitlichen Armen entlang läuft.

Mit den in Anspruch 15 angegebenen Merkmalen lässt sich ein Ausführungsbeispiel der Tropfschutzabdeckung realisieren, bei dem die Tropfschutzabdeckung in ihrer Schutzstellung schalenartig ausgeführt ist, sich jedoch auf einfache Weise in die Ruhestellung zusammenfalten lässt.

Für eine sichere Befestigung der Tropfschutzabdeckung entlang der inneren Randkontur der Auffangschale sind mehrere Hintergriffselemente als Verbindungsmittel vorgesehen, wie dies in Anspruch 16 angegeben ist. Die Abdichtung zwischen Auffangschale und Tropfschutzabdeckung wird damit weiter optimiert.

Eine Abdeckung der Serviceeinheit bzw. der Auffangschale ist mit einem gemäß Anspruch 17 vorgesehenen Deckel möglich.

Ein hoher Bedienkomfort ergibt sich bei einem in Anspruch 18 angegebenen Ausführungsbeispiel, wonach die Tropfschutzabdeckung selbsttätig von der Ruhestellung in die Schutzstellung auseinandergefaltet werden kann.

Eine besonders günstige Anordnung, ggf. auch an einer optisch exponierten Stelle, innerhalb des Fahrzeugs lässt sich mit dem in Anspruch 19 angegebenen Ausführungsbeispiel erreichen.

Die Erfindung wird nachfolgend anhand von Ausführungsbeispielen mit Bezug auf die Zeichnung näher erläutert. Es zeigen:
- Fig. 1: eine Draufsicht auf eine Serviceeinheit mit einer Tropfschutzabdeckung,
- Fig. 2: die Tropfschutzabdeckung in einer perspektivischen Ansicht,
- Fig. 3: in einem Schnitt entlang der Linie III-III in Fig. 1 die Serviceeinheit mit der in Schutzstellung vorliegenden Tropfschutzabdeckung und
- Fig. 4: in Schnittdarstellung die Serviceeinheit mit der Tropfschutzabdeckung in Ruhestellung und einem die Serviceeinheit abdeckenden Deckel.

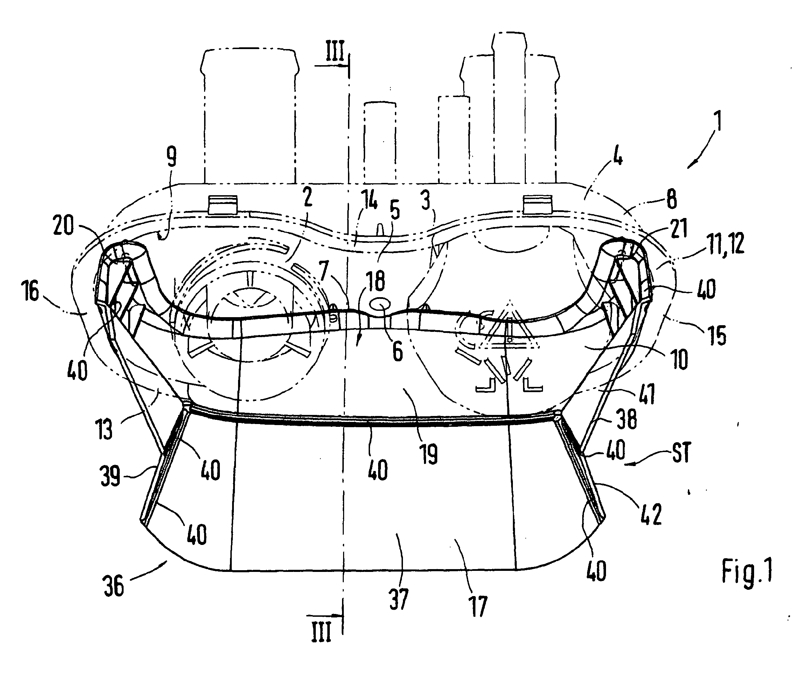

Fig. 1 zeigt eine Serviceeinheit 1 zur Betriebsmittelergänzung und/oder Wartung und/oder Kontrolle von zumindest einem Betriebsmittel für zumindest ein Aggregat, insbesondere eine Antriebsmaschine (nicht dargestellt) für ein hier nicht näher gezeigtes Kraftfahrzeug. Derartige Betriebsmittel können insbesondere Flüssigkeiten, wie beispielsweise Kraftstoff, Kühlmittel, Schmieröl, Hydrauliköl, Servolenkungsöl, Kältemittel für eine Klimaanlage oder dergleichen sein. Die Serviceeinheit 1 besitzt demnach zumindest ein Serviceelement für die Durchführung der Betriebsmittelergänzung, Wartung bzw. Kontrolle an dem Aggregat. Dieses Serviceelement kann somit als Peilstab, insbesondere Ölmessstab, Prüföffnung, Schauglas, das ggf. abnehmbar ist, Anschlussstück, insbesondere Ventil (ggf. Überdruck - bzw. Füllventil), Befüllstutzen 2 oder dergleichen ausgeführt sein. Über dieses Serviceelement kann jedenfalls ein Betriebsmittel des Aggregats austreten und/oder aufgefüllt und/oder kontrolliert werden. Im gezeigten Ausführungsbeispiel der Serviceeinheit 1 sind zwei Serviceelemente vorgesehen, die als Befüllstutzen 2 und 3 realisiert sind, von denen insbesondere der Befüllstutzen 2 für das Einfüllen von Schmiermittel der Antriebsmaschine und der Befüllstutzen 3 zum Befüllen des Kühlkreises für die Antriebsmaschine dient. Selbstverständlich können weitere Serviceelemente der Serviceeinheit 1 zugeordnet sein.

Der zumindest eine Befüllstutzen 2 bzw. 3 bzw. das Serviceelement ist zumindest teilweise von einer Auffangschale 4 umgeben, die einen Schalenboden 5 aufweist, der mit einem Ablauf 6 versehen sein kann, der im Schalenboden 5 selbst oder in einem Übergangsbereich 7 zwischen dem Schalenboden 5 und einer Schalenwand 8 oder in der Schalenwand 8 selbst ausgebildet sein kann. Von dem Schalenboden 5 geht die umlaufende, etwa aufrechte Schalenwand 8 aus, die eine innere Randkontur 9 besitzt, die beispielsweise oval, kreisförmig, rechteckig, gegebenenfalls mit abgerundeten Ecken, oder ähnlich ausgeführt ist. Vorzugsweise weist die Auffangschale 4 jedoch mit ihrer Schalenwand 8 eine innere Weite derart auf, dass die Schalenwand 8 mit Abstand zu den Befüllstutzen 2, 3 bzw. den darauf aufgesetzten Verschlusskappen 10 liegt. Selbstverständlich kann auch der Befüllstutzen 2 mit einer Verschlusskappe 10 versehen sein. Die Schalenwand 8 bildet mit ihrem freien Wandende 11 einen umlaufenden Schalenrand 12 aus, der einen unteren Randabschnitt 13, einen oberen Randabschnitt 14 und zwei seitliche Randabschnitte 15 und 16 umfasst.

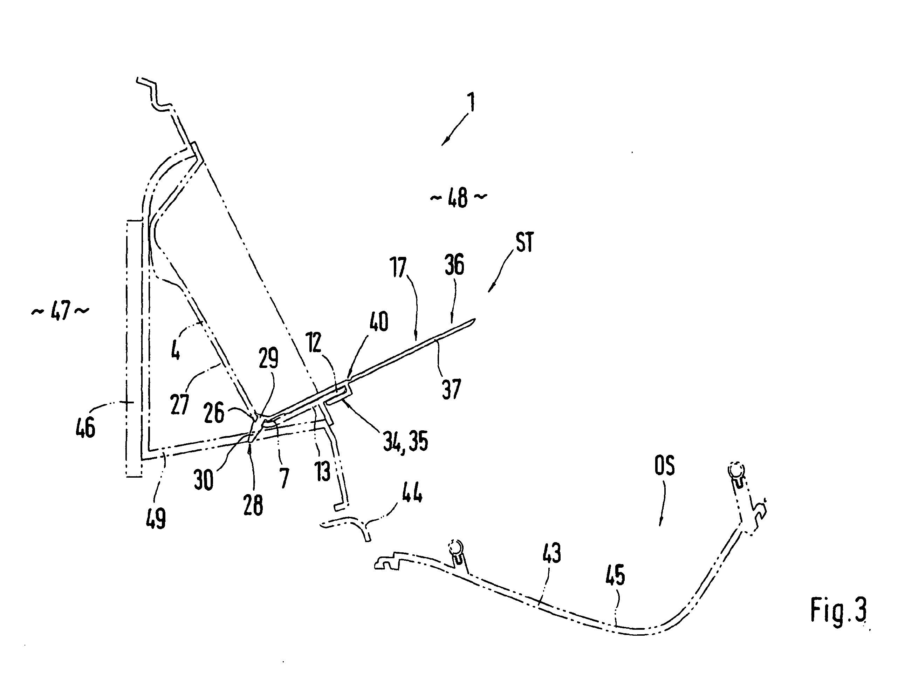

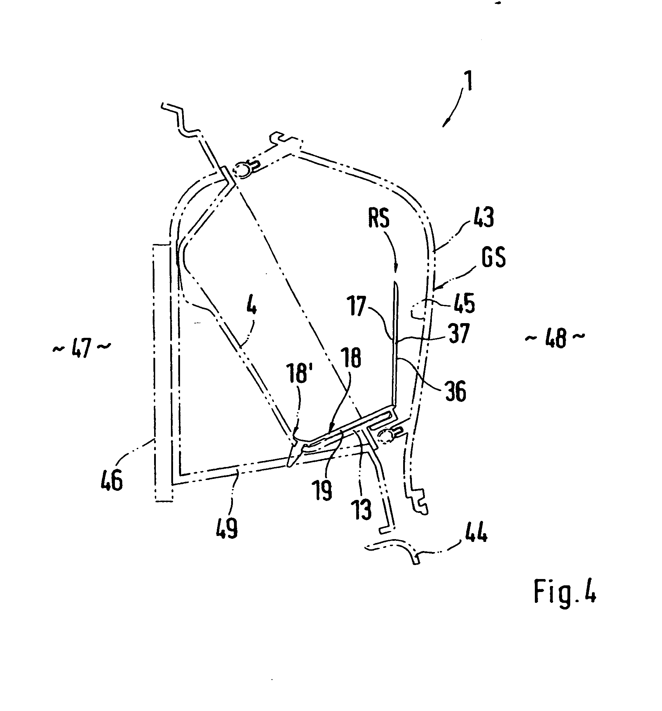

Der Auffangschale 4 ist zumindest eine Tropfschutzabdeckung 17 zugeordnet, die - wie insbesondere Fig. 4 zeigt - in einer Ruhestellung RS innerhalb der Auffangschale 4 bzw. innerhalb der Serviceeinheit 1 liegen kann und - wie in den Fig. 1 und 3 zu sehen ist - in eine auseinander gefaltete, den Schalenrand 12 überragende Schutzstellung ST verlagert werden kann. In der ausgeklappten bzw. auseinander gefalteten Schutzstellung ST bildet die Tropfschutzabdeckung 17 eine Verlängerung der Schalenwand 8, so dass über einen vergrößerten Schutzbereich ein Auffangen von verschütteter Flüssigkeit bei der Betriebsmittelergänzung über das Serviceelement oder aus dem Serviceelement austretender Flüssigkeit bzw. austretender und schnell kondensierender Dampf bei der Wartung bzw. Kontrolle über das Serviceelement gegeben ist. Um die Tropfschutzabdeckung 17 aus der Ruhestellung RS in die Schutzstellung ST überführen zu können, ist sie - wie vorstehend erwähnt - von der zusammengefalteten Ruhestellung RS in die auseinander gefaltete Schutzstellung ST überführbar. Wie insbesondere aus Fig. 1 hervorgeht, ist die Tropfschutzabdeckung 17 dem unteren Randabschnitt 13 des Schalenrandes 12 zugeordnet und überdies an die innere Randkontur 9 der Schalenwand 8 angepasst, insbesondere liegt sie dichtend an der Schalenwand 8 an. Innerhalb der Auffangschale 4 liegt ein Befestigungsabschnitt 18 der Tropfschutzabdeckung 17. Dieser Befestigungsabschnitt 18 ist in bevorzugter Ausführungsform etwa U-förmig ausgeführt und besitzt somit eine Basis 19, die dem unteren Randabschnitt 13 zugeordnet ist; sie umfasst ferner seitliche Arme 20 und 21, die von der Basis 19 ausgehen und sich zumindest teilweise innen entlang der seitlichen Randabschnitte 15 und 16 erstrecken. Der Befestigungsabschnitt 18 kann sich bis zum Schalenboden 5 und insbesondere bis in den Übergangsbereich 7 erstrecken und er kann dichtend an dem Schalenboden 5 bzw. der Schalenwand 8 anliegen. Für eine optimierte Abdichtung kann der Befestigungsabschnitt 18 mit einem sich in Richtung seines freien Endes verjüngendem Bereich 18' ausgestattet sein, der somit eine Dichtungslippe bildet, wie dies in Fig. 4 zu sehen ist.

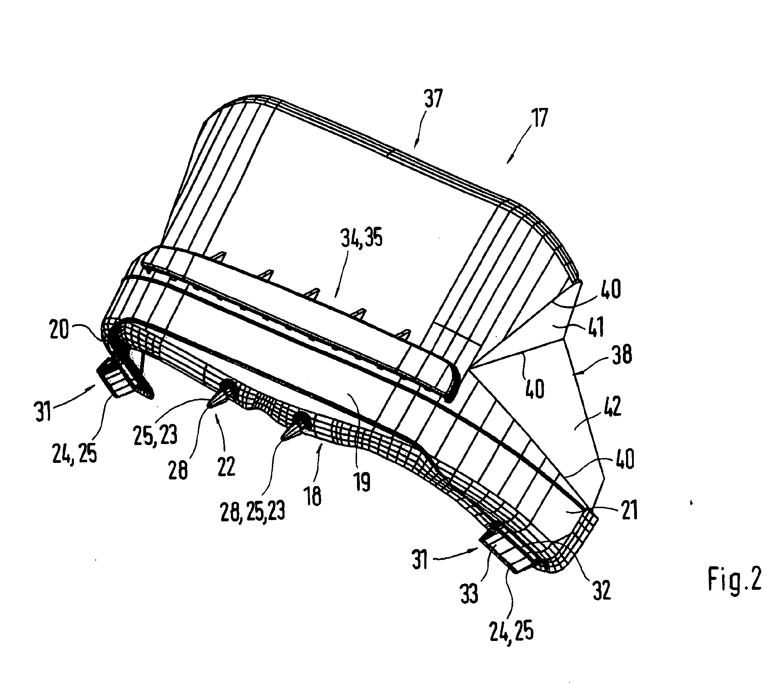

Der Befestigungsabschnitt 18 weist ein Verbindungsmittel 22 für die Befestigung der Tropfschutzabdeckung 17 an der Auffangschale 4 auf, wie dies aus den Fig. 2 und 3 hervorgeht. Das Verbindungsmittel 22 umfasst ein oder mehrere Befestigungselemente 23, 24, die als Hintergriffselemente 25 ausgebildet sind und jeweils mit einem entsprechenden in der Auffangschale 4 ausgebildeten Durchbruch 26 zusammenwirken, respektive diesen Durchbruch 26 durchgreifen und die Außenseite 27 der Auffangschale 4 hintergreifen. Das bzw. die Befestigungselemente 23 sind als so genannte Pilzzapfen 28 ausgeführt, die mit ihrem Fuß 29 den jeweiligen Durchbruch 26 durchgreifen und mit ihrem Pilzkopf 30 an der Außenseite 27 abdichtend zu liegen kommen. Die Befestigungselemente 24 sind als langgestreckte Stege 31 ausgebildet, die jeweils einen Stegfuß 32 aufweisen, der wie der Fuß 29 des Pilzzapfens 28, einen entsprechenden Durchbruch in der Auffangschale durchgreift. An den Stegfuß 32 schließt sich ein in analoger Weise zum Pilzkopf 30 wirkender Stegkopf 33 an, der die Außenseite 27 der Auffangschale 4 abdichtend hintergreift. Außerdem kann das Verbindungsmittel 22 noch einen Aufsteckabschnitt 34 aufweisen, der als Tasche 35 ausgeführt ist, die auf den Schalenrand 12 aufsteckbar ist, wie dies insbesondere in Fig. 3 zu sehen ist. Durch das zumindest eine Hintergriffselement 25 und/oder den Aufsteckabschnitt 34 lässt sich die Tropfschutzabdeckung 17 auf einfache Art und Weise an der Auffangschale 4 einclipsen, einhängen bzw. einknüpfen und damit befestigen. Für ein sicheres Halten der Tropfschutzabdeckung 17 an der Auffangschale 4 sind die Hintergriffselemente 25 des Verbindungsmittels 22 an der Basis 19 und den seitlichen Armen 20 und 21 des Befestigungsabschnitts 18 verteilt angeordnet. Insbesondere ist vorgesehen, dass die Pilzzapfen 28 der Basis 19 und die Stege 31 den seitlichen Armen 20 und 21 zugeordnet sind.

An den Befestigungsabschnitt 18 schließt sich ein Faltabschnitt 36 der Tropfschutzabdeckung 17 an. Der Faltabschnitt 36 überragt in der Schutzstellung ST die Schalenwand 18 und bildet so ein wannenförmiges bzw. trichterförmiges Auffangelement für verschüttetes bzw. ausgelaufenes Betriebsmittel. Für die Ausführung in Wannenform besitzt der Faltabschnitt 36 einen Grund 37 und Seitenwände 38 und 39. Für das Auseinanderfalten der Tropfschutzabdeckung 17 von der Ruhestellung RS in die Schutzstellung ST ist der Faltabschnitt 36 über zumindest eine Faltlinie 40 mit dem Befestigungsabschnitt 18 verbunden. Die Faltlinie wird in bevorzugter Ausführungsform durch eine Materialschwächung bzw. einen Einschnitt erreicht, so dass ein Filmscharnier an der Faltlinie 40 gebildet ist. Dadurch kann der Faltabschnitt 36 ausgehend von der Schutzstellung ST in Richtung der Auffangschale 4 eingeklappt werden, wie dies in Fig. 4 deutlich zu sehen ist. Im gezeigten Ausführungsbeispiel ist der Faltabschnitt 36 über mehrere Faltlinien 40 mit dem Befestigungsabschnitt verbunden, d.h., dass jeweils eine Faltlinie 40 zwischen dem Grund 37 und dem Befestigungsabschnitt 18 sowie jeweils eine Faltlinie 40 zwischen den Seitenwänden 38 und 39 und dem Befestigungsabschnitt 18 vorgesehen ist. Im gezeigten Ausführungsbeispiel liegt somit eine Faltlinie 40 zwischen dem Grund 37 und der Basis 19, eine Faltlinie 40 zwischen der Seitenwand 38 und dem Arm 21 sowie eine weitere Faltlinie 40 zwischen der Seitenwand 39 und dem Arm 20 des Befestigungsabschnitts 18. Für ein Platz sparendes Zusammenfalten ist der Faltabschnitt 36 überdies in sich selbst faltbar, wofür weitere Faltlinien 40 zwischen den Seitenwänden 38 und 39 und dem Grund 37 vorgesehen sind. Zusätzlich können die Seitenwände 38 und 39 faltbar sein, so dass jede Seitenwand 38 und 39 zumindest zwei Teilwände 41 und 42 aufweist, die jeweils über eine weitere Faltlinie 40 miteinander verbunden sind. Somit ergeben sich durch die Faltlinien 40 voneinander getrennt die Teilwände 41 und 42 in jeweils einer etwa dreieckigen Form, wie dies insbesondere aus Fig. 2 für die Seitenwand 38 zu sehen ist. Dadurch, dass der Faltabschnitt 36 und der Befestigungsabschnitt 18 sowie der Faltabschnitt 36 selbst durch die Faltlinien 40 miteinander verbunden ist, lässt sich die Tropfschutzabdeckung 17 in besonders einfacher Art und Weise einstückig ausführen, wobei insbesondere vorgesehen ist, die Tropfschutzabdeckung 17 aus einem elastischen Material herzustellen. Insbesondere wird hierfür ein Elastomer, vorzugsweise ein thermoplastisches Elastomer (TPE) verwendet, welches beispielsweise eine Härte von 50+/- 5 Shore A aufweist. Ein derartiges thermoplastisches Elastomer ist beispielsweise unter dem Handelsnamen Santoprene ® erhältlich.

In den Fig. 1 und 2 ist die Tropfschutzabdeckung 17 in ihrer hergestellten Form gezeigt, d.h., dass die Tropfschutzabdeckung auseinandergefaltet hergestellt wird. Wird die Tropfschutzabdeckung 17 dann - wie Fig. 4 zeigt - zusammengefaltet in die Ruhestellung RS überführt, ist sie durch die Verwendung des elastischen Materials in Richtung -ihrer Schutzstellung ST vorgespannt, so dass ein selbsttätiges Auseinanderfalten der Tropfschutzabdeckung 17 gegeben ist. Das selbsttätige Auseinanderfalten der Tropfschutzabdeckung 17 ist insbesondere dann vorteilhaft, wenn die Serviceeinheit 17 mit einem die Auffangschale 4 verschließenden Deckel 43 versehen ist, der von der Auffangschale 4 abnehmbar und wieder aufsetzbar ist. Vorzugsweise ist der Deckel 43 parallel zum unteren Randabschnitt 13 und unterhalb dieses Randabschnitts 13 um eine Schwenkachse (nicht gezeigt) gelagert, so dass er ausgehend von seiner in Fig. 4 dargestellten geschlossenen Stellung GS in die in Fig. 3 gezeigte offene Stellung OS geschwenkt bzw. geklappt werden kann. In der offenen Stellung OS wird dann der Faltabschnitt 36 freigegeben, so dass er sich selbsttätig in die Schutzstellung ST auseinanderfaltet bzw. ausklappt und beim Schließen des Deckels 43, also beim Überführen von der geöffneten Stellung OS in die geschlossene Stellung GS, von dem Deckel 43 in die Ruhestellung RS gedrückt wird und dabei einerseits in Richtung Auffangschale 4 eingeklappt wird und andererseits die Seitenwände 38 und 39 in sich gefaltet werden.

Der Deckel 43 kann an einem benachbarten Innenverkleidungsteil 44 entsprechend schwenkbar angelenkt sein. Denkbar wäre es überdies, dass der Deckel 43 lediglich von der Auffangschale 4 abnehmbar und wieder aufsetzbar ist, also keine feste Anbindung aufweist. Bei entsprechender Anlenkung des Deckels 43, und insbesondere bei seiner Anlenkung an der Auffangschale 4 wäre es denkbar, dass die Tropfschutzabdeckung 17 alternativ an der Deckelinnenseite 45 befestigt sein könnte, so dass ein Ausklappen des Faltabschnitts 36 in Richtung des unteren Randabschnitts 13 gegeben wäre.

Wie die Fig. 3 und 4 zeigen, ist die Serviceeinheit 1 einer Karosseriewand 46 zugeordnet, die einen Aggregatraum, insbesondere Motorraum 47 für die Antriebsmaschine von einem Fahrzeuginnenraum 48, insbesondere Gepäckraum, trennt. Die Karosseriewand 46 kann im wesentlichen aufrecht stehen und die Serviceeinheit 1 kann dem Fahrzeuginnenraum 48 zugeordnet sein. Befestigt ist die Serviceeinheit 1 an der Karosseriewand 46 über einen Montagerahmen 49. Dabei ist die Serviceeinheit bzw. die Auffangschale 4 - bezogen auf den Schalenboden 4 - aufrecht oder geneigt ausgerichtet an dem Montagerahmen 49 gehalten. Der Randabschnitt 13 bildet somit den unteren Abschnitt des Schalenrandes 12.

Denkbar wäre es nach einem nicht gezeigten Ausführungsbeispiel, die Serviceeinheit 1 etwa waggerecht auszurichten, das heißt, dass der Schalenboden 5 etwa horizontal verläuft. Vorzugsweise für dieses Ausführungsbeispiel könnte die Tropfschutzabdeckung 17 in der Schutzstellung ST trichterförmig ausgeführt sein. Dafür könnte die Schalenwand 8 mit zwei Tropfschutzabdeckungen 17 derart ausgestattet sein, dass sie in der Schutzstellung ST entlang der Schalenwand 8 umläuft.

Aus Fig. 4 ist noch ersichtlich, dass die Tropfschutzabdeckung 17 mit ihrem Faltabschnitt 36 in Ruhestellung RS innerhalb des von der Auffangschale und dem Deckel 43 begrenzten Raumes der Serviceeinheit 1 liegt. Je nach Ausgestaltung des Deckels 43 kann der Faltabschnitt 36 zumindest teilweise bis in die Auffangschale 4 eingeklappt werden.

## Patentansprüche

1. Serviceeinheit (1) zur Betriebsmittelergänzung und/oder Wartung an einem Fahrzeug mit einem Aggregat, insbesondere einer Antriebsmaschine, mit zumindest einem Serviceelement, vorzugsweise Befüllstutzen (2,3), und einer das Serviceelement zumindest teilweise umgebenden Auffangschale (4), an der eine Tropfschutzabdeckung (17) angebracht ist, die aus einer Ruhestellung (RS) in eine zumindest teilweise aus der Auffangschale (4) herausragende Schutzstellung (ST) verlagerbar ist, **dadurch gekennzeichnet, dass** die Tropfschutzabdeckung (17) durch zumindest teilweises Auseinanderfalten von der Ruhestellung (RS) in die Schutzstellung (ST) überführbar ist.

2. Serviceeinheit nach Anspruch 1, **dadurch gekennzeichnet, dass** die Tropfschutzabdeckung (17) einen Befestigungsabschnitt (18) zur Verbindung mit der Auffangschale (4) und einen Faltabschnitt (36) aufweist, welcher Faltabschnitt (36) von der Ruhestellung (RS) in die Schutzstellung (ST) überführbar ist.

3. Serviceeinheit nach Anspruch 2, **dadurch gekennzeichnet, dass** der Befestigungsabschnitt (18) und der Faltabschnitt (36) einstückig ausgeführt sind.

4. Serviceeinheit nach einem der vorhergehenden Ansprüche, **dadurch gekennzeichnet, dass** die Tropfschutzabdeckung (17) aus einem elastischen Material hergestellt ist.

5. Serviceeinheit nach einem der vorhergehenden Ansprüche, **dadurch gekennzeichnet, dass** der Befestigungsabschnitt (18) ein Verbindungsmittel (22) für die Befestigung der Tropfschutzabdeckung (17) an der Auffangschale (4) aufweist.

6. Serviceeinheit nach Anspruch 5, **dadurch gekennzeichnet, dass** das Verbindungsmittel (22) zumindest ein Hintergriffselement (25) umfasst, das die Auffangschale (4) in einem Durchbruch (26) durchgreift.

7. Serviceeinheit nach Anspruch 5 oder 6, **dadurch gekennzeichnet, dass** das Verbindungsmittel (22) einstückig mit der Tropfschutzabdeckung (17) ausgeführt ist.

8. Serviceeinheit nach einem der vorhergehenden Ansprüche, **dadurch gekennzeichnet, dass** die Tropfschutzabdeckung (17), insbesondere der Faltabschnitt (36), einen Grund (37) und Seitenwände (28,39) aufweist.

9. Serviceeinheit nach einem der vorhergehenden Ansprüche, **dadurch gekennzeichnet, dass** der Faltabschnitt (36) über eine Faltlinie (40) mit dem Befestigungsabschnitt (18) verbunden ist.

10. Serviceeinheit nach Anspruch 6, **dadurch gekennzeichnet, dass** die jeweilige Seitenwand (38,39) über eine Faltlinie (40) mit dem Grund (37) verbunden ist.

11. Serviceeinheit nach Anspruch 6 oder 7, **dadurch gekennzeichnet, dass** jede Seitenwand (38,39) zwei Teilwände (40,41) umfasst, die über eine Faltlinie (40) miteinander verbunden sind.

12. Serviceeinheit nach einem der vorhergehenden Ansprüche, **dadurch gekennzeichnet, dass** jede Seitenwand (38,39) jeweils über eine Faltlinie (40) mit dem Grund (37) und dem Befestigungsabschnitt (18) verbunden ist.

13. Serviceeinheit nach einem der vorhergehenden Ansprüche, **dadurch gekennzeichnet, dass** der Befestigungsabschnitt (18) an eine innere Randkontur (9) der Auffangschale (4), vorzugsweise dichtend, angepasst ist.

14. Serviceeinheit nach einem der vorhergehenden Ansprüche, **dadurch gekennzeichnet, dass** der Befestigungsabschnitt (18) eine Basis (19) und zwei davon ausgehende seitliche Arme (20,21) aufweist.

15. Serviceeinheit nach einem der vorhergehenden Ansprüche, **dadurch gekennzeichnet, dass** der Grund (37) des Faltabschnitts (36) mit der Basis (19) des Befestigungsabschnitts (18) und jeweils eine Seitenwand (38,39) des Faltabschnitts (36) mit dem zugehörigen Arm (20,21) verbunden ist.

16. Serviceeinheit nach einem der vorhergehenden Ansprüche, **dadurch gekennzeichnet, dass** das Verbindungsmittel (22) mehrere Hintergriffselemente (25) aufweist, von denen jeweils zumindest eines an der Basis (19) und den Armen (20, 21) des Befestigungsabschnitts (18) angeordnet ist.

17. Serviceeinheit nach einem der vorhergehenden Ansprüche, **gekennzeichnet durch** einen abnehmbaren Deckel (43), der die Auffangschale (4) verschließt.

18. Serviceeinheit nach einem der vorhergehenden Ansprüche, **dadurch gekennzeichnet, dass** die Tropfschutzabdeckung (17) beim Abnehmen des Deckels (43) selbsttätig aus der Ruhestellung (RS), insbesondere durch Auseinanderfalten, in die Schutzstellung (ST) überführbar ist.

19. Serviceeinheit nach einem der vorhergehenden Ansprüche, **dadurch gekennzeichnet, dass** die Auffangschale (4) etwa aufrecht in dem Fahrzeug anordenbar ist und dass die Tropfschutzabdeckung (17) einem unteren Randabschnitt (13) der Auffangschale (4) zugeordnet ist.

## Claims

1. Service unit (1) for operating medium replenishment and/or servicing on a vehicle having an assembly, in particular a drive machine, having at least one service element, preferably filling nozzle (2,3), and having a collecting tray (4) which at least partially surrounds the service element and to which is attached a drip protection cover (17) which can be moved from a rest position (RS) into a protection position (ST) in which it projects at least partially out of the collecting tray (4), **characterized in that** the drip protection cover (17) can be moved from the rest position (RS) into the protection position (ST) by being at least partially unfolded.

2. Service unit according to Claim 1, **characterized in that** the drip protection cover (17) has a fastening section (18) for connecting to the collecting tray (4), and a fold section (36), which fold section (36) can be moved from the rest position (RS) into the protection position (ST).

3. Service unit according to Claim 2, **characterized in that** the fastening section (18) and the fold section (36) are formed in one piece.

4. Service unit according to one of the preceding claims, **characterized in that** the drip protection cover (17) is produced from an elastic material.

5. Service unit according to one of the preceding claims, **characterized in that** the fastening section (18) has a connecting means (22) for fastening the drip protection cover (17) to the collecting tray (4).

6. Service unit according to Claim 5, **characterized in that** the connecting means (22) comprises at least one engage-behind element (25) which extends through the collecting tray (4) in an aperture (26).

7. Service unit according to Claim 5 or 6, **characterized in that** the connecting means (22) is formed in one piece with the drip protection cover (17).

8. Service unit according to one of the preceding claims, **characterized in that** the drip protection cover (17), in particular the fold section (36), has a base (37) and side walls (28,39).

9. Service unit according to one of the preceding claims, **characterized in that** the fold section (36) is connected by means of a fold line (40) to the fastening section (18).

10. Service unit according to Claim 6, **characterized in that** the respective side wall (38,39) is connected by means of a fold line (40) to the base (37).

11. Service unit according to Claim 6 or 7, **characterized in that** each side wall (38,39) has two partial walls (40,41) which are connected to one another by means of a fold line (40).

12. Service unit according to one of the preceding claims, **characterized in that** each side wall (38,39) is connected in each case by means of a fold line (40) to the base (37) and the fastening section (18).

13. Service unit according to one of the preceding claims, **characterized in that** the fastening section (18) is matched, preferably sealingly, to an inner edge contour (9) of the collecting tray (4).

14. Service unit according to one of the preceding claims, **characterized in that** the fastening section (18) has a base (19) and two lateral arms (20,21) which proceed from said base (19).

15. Service unit according to one of the preceding claims, **characterized in that** the base (37) of the fold section (36) is connected to the base (19) of the fastening section (18) and in each case one side wall (38,39) of the fold section (36) is connected to the associated arm (20,21).

16. Service unit according to one of the preceding claims, **characterized in that** the connecting means (22) has a plurality of engage-behind elements (25), of which in each case at least one is arranged on the base (19) and on the arms (20,21) of the fastening section (18).

17. Service unit according to one of the preceding claims, **characterized by** a removable cover (43) which closes off the collecting tray (4).

18. Service unit according to one of the preceding claims, **characterized in that** the drip protection cover (17) can automatically be moved, in particular by unfolding, from the rest position (RS) into the protection position (ST) as the cover (43) is removed.

19. Service unit according to one of the preceding claims, **characterized in that** the collecting tray (4) can be arranged approximately upright in the vehicle, and **in that** the drip protection cover (17) is assigned to a lower edge section (13) of the collecting tray (4).

## Revendications

1. Unité de service (1) pour le remplissage des fluides de travail et/ou pour l'entretien sur un véhicule avec un groupe, en particulier un moteur, avec au moins un élément de service, de préférence des tuyaux de remplissage (2, 3), et un bac de collecte (4) entourant au moins partiellement l'élément de service, sur lequel est installé un couvercle de protection contre les gouttes (17), qui peut être déplacé d'une position de repos (RS) dans une position de protection (ST) sortant au moins partiellement hors du bac de collecte (4), **caractérisée en ce que** le couvercle de protection contre les gouttes (17) peut être amené de la position de repos (RS) à la position de protection (ST) en se déployant au moins partiellement.

2. Unité de service selon la revendication 1, **caractérisée en ce que** le couvercle de protection contre les gouttes (17) comprend une partie de fixation (18) pour sa liaison au bac de collecte (4) et une partie pliante (36), qui peut être amenée de la position de repos (RS) à la position de protection (ST).

3. Unité de service selon la revendication 2, **caractérisée en ce que** la partie de fixation (18) et la partie pliante (36) sont réalisées en une seule pièce.

4. Unité de service selon l'une quelconque des revendications précédentes, **caractérisée en ce que** le couvercle de protection contre les gouttes (17) est fabriqué en une matière élastique.

5. Unité de service selon l'une quelconque des revendications précédentes, **caractérisée en ce que** la partie de fixation (18) comporte un moyen d'assemblage (22) pour la fixation du couvercle de protection contre les gouttes (17) sur le bac de collecte (4).

6. Unité de service selon la revendication 5, **caractérisée en ce que** le moyen d'assemblage (22) comprend au moins un élément d'accrochage arrière (25), qui traverse le bac de collecte (4) dans une ouverture (26).

7. Unité de service selon la revendication 5 ou 6, **caractérisée en ce que** le moyen d'assemblage (22) est réalisé en une seule pièce avec le couvercle de protection contre les gouttes (17).

8. Unité de service selon l'une quelconque des revendications précédentes, **caractérisée en ce que** le couvercle de protection contre les gouttes (17), en particulier la partie pliante (36), comprend un fond (37) et des parois latérales (38, 39).

9. Unité de service selon l'une quelconque des revendications précédentes, **caractérisée en ce que** la partie pliante (36) est reliée à la partie de fixation (18) par une ligne de pliage (40).

10. Unité de service selon la revendication 6, **caractérisée en ce que** la paroi latérale respective (38, 39) est reliée au fond (37) par une ligne de pliage (40).

11. Unité de service selon la revendication 6 ou 7, **caractérisée en ce que** chaque paroi latérale (38, 39) comprend deux parois partielles (40, 41), qui sont reliées l'une à l'autre par une ligne de pliage (40).

12. Unité de service selon l'une quelconque des revendications précédentes, **caractérisée en ce que** chaque paroi latérale (38, 39) est chaque fois reliée par une ligne de pliage (40) au fond (37) et à la partie de fixation (18).

13. Unité de service selon l'une quelconque des revendications précédentes, **caractérisée en ce que** la partie de fixation (18) est adaptée à un contour de bord intérieur (9) du bac de collecte (4), de préférence de façon étanche.

14. Unité de service selon l'une quelconque des revendications précédentes, **caractérisée en ce que** la partie de fixation (18) comprend une base (19) et deux bras latéraux (20, 21) partant de celle-ci.

15. Unité de service selon l'une quelconque des revendications précédentes, **caractérisée en ce que** le fond (37) de la partie pliante (36) est relié à la base (19) de la partie de fixation (18) et chaque paroi latérale (38, 39) de la partie pliante (36) est reliée respectivement au bras correspondant (20, 21).

16. Unité de service selon l'une quelconque des revendications précédentes, **caractérisée en ce que** le moyen d'assemblage (22) comporte plusieurs éléments d'accrochage arrière (25), dont au moins un est disposé respectivement sur la base (19) et sur les bras (20, 21) de la partie de fixation (18).

17. Unité de service selon l'une quelconque des revendications précédentes, **caractérisée par** un couvercle amovible (43), qui ferme le bac de collecte (4).

18. Unité de service selon l'une quelconque des revendications précédentes, **caractérisée en ce que** le couvercle de protection contre les gouttes (17) peut être amené automatiquement de la position de repos (RS) dans la position de protection (ST), en particulier en se déployant, lors de l'enlèvement du couvercle (43).

19. Unité de service selon l'une quelconque des revendications précédentes, **caractérisée en ce que** le bac de collecte (4) peut être disposé environ verticalement dans le véhicule et **en ce que** le couvercle de protection contre les gouttes (17) est associé à une partie de bord inférieur (13) du bac de collecte (4).
